# EUROPEAN PATENT APPLICATION

(11) **EP 0 983 970 A2**
(43) Date of publication of application: **08.03.2000**
(21) Application number: 99202738.3
(22) Date of filing: 25.08.1999
(51) Int. Cl.: C02F 3/34

(54) **A material and a method for wastewater treatment**

(30) Priority: 25.08.1998 JP 23830498
(71) Applicant: Watari, Shigenobu, Nagano-shi, Nagano (JP)
(72) Inventor: Watari, Shigenobu, Nagano-shi, Nagano (JP); Sasahira, Takashi, Tokyo (JP)
(74) Representative: Van kan, Johan Joseph Hubert, Ir.

(57) **Abstract**

The present invention is to offer a material for wastewater treatment and a method for wastewater treatment which does not produce odor, costs low and can remarkably decrease highly concentrated organic wastes stably and effectively. Furthermore, the present invention is to offer a way how can utilize a waste medium of mushroom.

Said material for wastewater treatment consists of *Streptomyces* dominantly proliferated on a high porous inorganic carrier and/or organic carrier like a waste medium of mushroom. Said material for wastewater treatment is added to a wastewater like hog feces and urine and aeration is carried out. Then wastewater treatment is achieved by filtration.

## Description

### Field of the Invention

The present invention mainly relates to a material for wastewater treatment such as domestic wastewater and industrial wastewater or eutrophic water of rivers, lakes and marshes and to a method for wastewater treatment by using said material.

### Description of the Prior Art

Usually, physical and chemical methods such as a filtration, a flocculant precipitation or a pressure flotation, and a biological method mainly utilizing microorganisms have been used in order to treat wastewater containing highly concentrated organics (enriched wastewater) such as wastewater like industrial wastewater containing feces and urine or domestic wastewater, and a part of rivers, lakes and marshes.

A physical and chemical method is ineffectual in spite of high cost. Besides, bad influences to a natural ecology by chemicals are in anxiety. Therefore, a biological method is highly expected today.

Representative practical technologies in microbial treatments are activated-sludge process, biological slime process and anaerobic process.

Among these biological treatments, activated-sludge process and biological slime process are ineffective for the treatment of highly concentrated organic wastes. On the other hands, anaerobic process is effective for highly concentrated organic wastes. However, said anaerobic process has some demerits, such as its digesting speed of said wastes is slow, an apparatus for the digestion is complicated, odor is produced, and the construction of said apparatus and the operation and maintenance cost high.

Immobilized *Bacillus, Lactbacillus, Pseudomonas* or yeast is used as a material for wastewater treatment. However, their evaluation is generally low because of their price and low reappearance. Some commercial materials contain many species of microorganisms. However, their application effect is generally unstable, because some microorganisms are removed during the proliferation to result in the unstableness. Besides, some microorganisms produce bad odor materials.

On the consideration of such problems of conventional technologies, the purpose of the present invention is to offer a material for wastewater treatment and a method for wastewater treatment, which does not produce bad odor, costs low and can remarkably decrease highly concentrated organic wastes stably and effectively.

Furthermore, the purpose of the present invention is to offer a material for wastewater treatment and a method for wastewater treatment, which effectively utilize media after harvest of mushroom.

### Brief summary of the invention

Said material for wastewater treatment consists of *Streptomyces* dominantly proliferated on a high porous inorganic carrier and/or organic carrier like a waste medium of mushroom. Said material for wastewater treatment is added to a wastewater like hog feces and urine and aeration is carried out. Then wastewater treatment is achieved by filtration.

### Brief description of the drawings

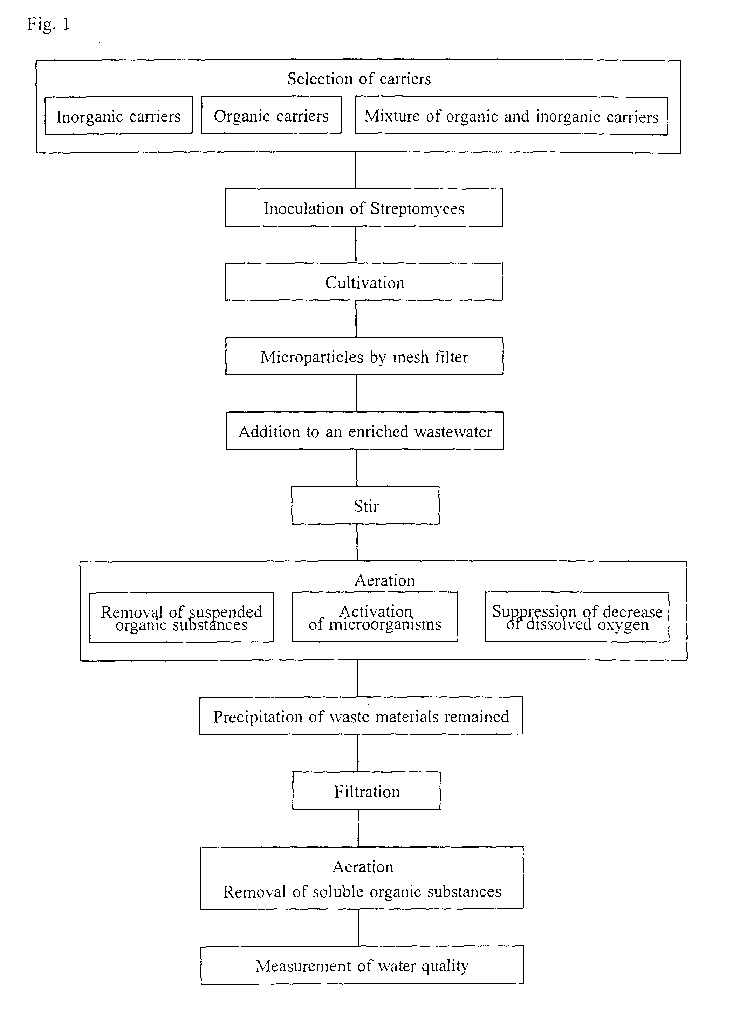

Fig. 1 is a flowchart showing a process of wastewater treatment in the present invention.

Fig. 2 is a graph showing the time transition of transparency, BOD and SS in the process of wastewater treatment based on the method of the present invention.

### Detailed description

A material for wastewater treatment related to the present invention is characterized by that it dominantly contains *Streptomyces* immobilized to an inorganic/organic carrier.

And, a method for wastewater treatment related to the present invention is characterized by that, in the present method, a wastewater treatment is carried out by aeration after said immobilized *Streptomyces* was added in a wastewater and by filtration of the suspension of said immobilized *Streptomyces.*

Either organic or inorganic material is used as a carrier for the immobilization of *Streptomyces .* High porous carriers such as a charcoal, an activated carbon, a zeolite and carbides of organic substances (containing a waste medium of mushroom) are used as inorganic carriers. High porous carrier can make *Streptomyces* grow well and produce a great deal of spores on the surface space of said carrier. Therefore, the *Streptomyces* inoculated in said inorganic carrier forms its microflora there dominantly.

Calcium alginate or polyvinyl alcohol, for example, can be used as an organic carrier. However, a culture medium wasted after harvest of mushroom (a waste medium) is the best.

A medium for the bottle cultivation of *Lyophyllum ulmarium* or *Pholiota nameko,* for example, is produced by disrupted corncob, tofu refuse (dried), rice bran and water. Beetpulp, chaffs, walnuts, and saw dust can be used in stead of corncob. A waste medium of mushroom was used as a raw material of compost, so far. However, in the case of the use of said compost, the immature one containing nonbiodegradable organics was often applied in a cultivated field, which permits the proliferation of phytopathogens like *Fusarium* and club root.

Mushroom and various kinds of filamentous fungi already form their microflora in said waste medium. Therefore, if *Streptomyces* is inoculated to said microflora, it parasitizes said mushroom and various kinds of filamentous fungi in said waste medium and proliferates by the vigorous fungilytic action. Fermentation period of a waste medium of mushroom needs about 6 months.

In the present invention, not only a waste medium, but a mushroom culture can be used as a medium for growth of said *Streptomyces.* As for the medium for the proliferation of said *Streptomyces,* any kinds of waste media and culture media of mushrooms can be used for the proliferation of said *Streptomyces.*

As for the material for wastewater treatment in the present invention, either of the following materials are used. (1) the first material produced by dominantly proliferating said *Streptomyces* on an inorganic carrier or (2) the second material produced by dominantly proliferating said *Streptomyces* sp. on an organic carrier. Mixture of said first and second material can also be used as a material for wastewater treatment in the present invention. The mixture of first and second material helps said *Streptomyces* proliferating from said carrier in the first material to said carrier in second material or from said carrier in the second material to said carrier in the first material to result in highly concentrated growth of said *Streptomyces* sp. because of their synergistic action.

In the present invention, any kind of microorganism belonging to *Actinomycetes* can be used, because it can be expected to have the abilities for wastewater treatment. Said microorganism belonging to *Actinomycetes* is, for example, *Streptomyces, Actinoplanes, Streptosporangium, Nocardia, Actinomadura, Micromonospora, Micropolyspora* and *Thermoactinomyces*. Among them, a microorganism belonging to Genus *Streptomyces,* especially, *Streptomyces* sp. YS-1 is the best.

The microbial properties of *Streptomyces* sp. YS-1 growing on ISP-NO.2 are as follows.

The components of ISP-NO.2 are Yeast Extract 0.4g, Malt Extract 1.0g, Glucose 0.4g, Agar 1.6g and distilled water 100ml. The pH is 7.3. The medium was used after sterilization by autoclaving at 120°C for 15 minutes.

*Streptomyces* sp. YS-1 produced well-branched aerial mycelia with the width of 0.8~1.2 µm after aerobic cultivation on a plate medium of ISP-NO.2 at 20°C for 1~2 weeks. The vegetative mycelium was well branched and non-fragmented. The reverse color was brown. The vegetative mycelium did not produce spores, but the aerial mycelium produced spore chains with more than 20 spores. Diaminopimeric acid (LL-DAP) was contained in the cellwall.

The physiological properties are as follows.

Protease activity was measured by putting an agar piece cultivating *Streptomyces* sp. YS-1 (agar piece method) on an agar plate containing 3% of casein. This resulted in that *Streptomyces* sp. YS-1 had a protease activity. Furthermore, said *Streptomyces* sp. YS-1 showed anti-microbial activity against *Rhizoctonia solani* IFO-0464 and *Fusarium oxysporum* IFO-30700 by said agar piece method on PSA medium cultivating said fungi.

In general, 10⁸~10¹⁰ cells of microorganisms are contained in lg of soil. Among these microorganisms, *Streptomyces* is contained about 10⁶ cells/g in soil. A material for wastewater treatment in the present invention contains *Streptomyces* as a dominant species, whose number is more than 10⁸ cells /g in said material.

Besides, as a material for wastewater treatment in the present invention, the mixture of the following first material to third material can be used; (1) said first material produced by dominantly proliferating said *Streptomyces* on an inorganic carrier, (2) said second material produced by dominantly proliferating said *Streptomyces* on an organic carrier treated by fermenting a waste medium of mushroom along and (3) said third material produced by proliferating said *Streptomyces* on an organic carrier treated by fermenting a waste medium of mushroom with a putrefactive waste.

The third material for wastewater treatment consists of one produced by inoculating and cultivating *Streptomyces* on a waste medium of mushroom adding poultry manure, for example. The rate of a waste medium of mushroom and a putrefactive waste like poultry manure is about 1:1 in weight. Many kinds of microorganisms are in a putrefactive waste. These microorganisms stimulate the decomposing speed of a waste medium of mushroom, compared with one of a waste medium of mushroom alone (for example, about 3 months). The third material for wastewater treatment is, like the second material for wastewater treatment, completed by the fermentation for about 30 days after inoculation of *Streptomyces.*

The second material for wastewater treatment (2) produced by a waste medium of mushroom and the third material for wastewater treatment (3) are mixed at almost the same rate. The first material for wastewater treatment produced by an inorganic carrier is added at the rate of about 15% of the second material for wastewater treatment or the third material for wastewater treatment (in weight).

Removal mechanism of organic substances by a microorganism is based on the decomposition of organic substances by extra-cellular enzymes like proteinase, lipase and cellulase produced by said microorganism and on the uptake of the decomposed materials by said microorganism. Therefore, the removal of organic substances in wastewater is dependent on the decomposing abilities of organic substances, the duration of said abilities and the uptake abilities of said decomposed materials by microorganisms living in waste water. Microorganisms belonging to Genus *Streptomyces* are known to the many species in said Genus and the much amount of the productivity of metabolites among microorganisms (enzymes like protease, cellulase and amylase, for example). In general, the microorganisms added in a foreign environment are killed by microorganisms already forming their microflora there. However, in the method of the present invention, said *Streptomyces* added in a wastewater not only is not killed in that environment, but can proliferate there. The reason comes from that a material for wastewater treatment in the present invention contains many amounts of said *Streptomyces* and a great deal of the metabolites there. Therefore, the addition of a material for wastewater treatment in the present invention to a wastewater helps said *Streptomyces* to form their microflora there without the deletion of the number in spite of the foreign environment. This results in an effective decomposition and removal of said organic substances in the waste water.

A material for wastewater treatment produced by dominantly proliferating *Streptomyces* on an inorganic carrier has an effect to help said *Streptomyces* to proliferate by uptake of organic substances decomposed by the metabolites in waste water.

In the case of a material for wastewater treatment produced by dominantly proliferating *Streptomyces* on an organic carrier, especially a waste medium of mushroom alone without the addition of a putrefactive waste, said *Streptomyces* converts said waste medium to humus by decomposing a nonbiodegradable organic, lignin, there, cooperating with mushroom. Said material produced by dominantly proliferating *Streptomyces* on a waste medium of mushroom selectively stimulates the growth of *Streptomyces.* This means that said material contains many amounts of mycelia of said *Streptomyces* and realizes a great ability of decomposition and removal of organic substances in waste water.

In the case of a material for wastewater treatment produced by a waste medium of mushroom adding a putrefactive waste, the addition of said material to a wastewater has the effect that microorganisms, mainly bacteria, in a putrefactive waste decompose said waste medium and, at the same time, organic substances in said wastewater. In this case, the decomposition of organic substances by *Streptomyces* is carried out at the same time, because *Streptomyces* was inoculated in said material in advance. The proliferation of said *Streptomyces* inhibits the overgrowth of bacteria.

The amount of a material for wastewater treatment is about 1g~ 20g in 1 litter of a waste water, in the case of the addition of a mixture of the materials (first to third). In the use of each material of either an inorganic carrier or an organic carrier, the amount added is a little bit more than that of the mixture of said materials for wastewater treatment.

Aeration is carried out after addition and stir of a material for wastewater treatment. Aeration has the effect of the activation of *Streptomyces* in a wastewater and the removal of insoluble organic substances there based on pressure flotation. In addition, aeration has the effect of suppression of decrease of dissolved oxygen. Aeration is carried out for 5 to 10 minutes.

After aeration, the wastewater is stood out for a while and suspending solid is precipitated. The supernatant is filtrated by some means.

This supernatant still contains a material for wastewater treatment. Therefore, the continuous aeration of said supernatant brings the better result, because microbial degradation is stimulated by said aeration. The second aeration period can be shortened than that of the first aeration.

As *Streptomyces* is dominantly proliferated on a material for wastewater treatment, many amounts of metabolites with a decomposing abilities of organic substances is produced in said material. Therefore, a material for wastewater treatment in the present invention can realize a good treatment of wastewater with a low cost and a short time.

A material for wastewater treatment in the present invention can treat a waste water without production of odor gases, because *Streptomyces* does not produce odor gases as metabolites, different from other bacteria.

A waste medium of mushroom was an industrial waste matter so far. However, in the present invention, which utilizes a waste medium of mushroom as a carrier for the proliferation of *Streptomyces,* said waste medium of mushroom is completely decomposed containing nonbiodegradable organics.

### Best mode of the Invention

Some working examples on the present invention will be described in detail.

### Embodiment 1

Feces and urine of hogs produced in a swine housing was separated to solid and liquid. The liquid was used as sample water in the present invention.

As a material for wastewater treatment, the same rate of the mixture of the first to third materials for wastewater treatment was used , which were produced by said waste medium of mushroom after the bottle cultivation. The first material for wastewater treatment was produced by the inoculation of *Streptomyces* sp. YS-1 on carbide of said material. The second material for wastewater treatment was produced by the inoculation of *Streptomyces* sp. YS-1 on said waste medium which was stood out for about 6 months and the further cultivation for about 30 days after said inoculation. The third material for wastewater treatment was produced by the inoculation of *Streptomyces* sp. YS-1 on the material which a waste medium of mushroom and poultry manure were mixed at the rate of 1:1 in weight and incubated for about 3 months and the further cultivation for about 30 days after said inoculation. The test was carried out by using micro particles filtrated by about 100 mesh filter. The micro particles contained 10¹¹~10¹³ cells of *Streptomyces* sp. YS-1 in 1g.

10g of said material for wastewater treatment was added in 1 litter of said sample water, stirred well and aerated from the bottom for about 5 minutes. The treated sample water was stood out for a while and filtrated. The whole process took about 10 minutes.

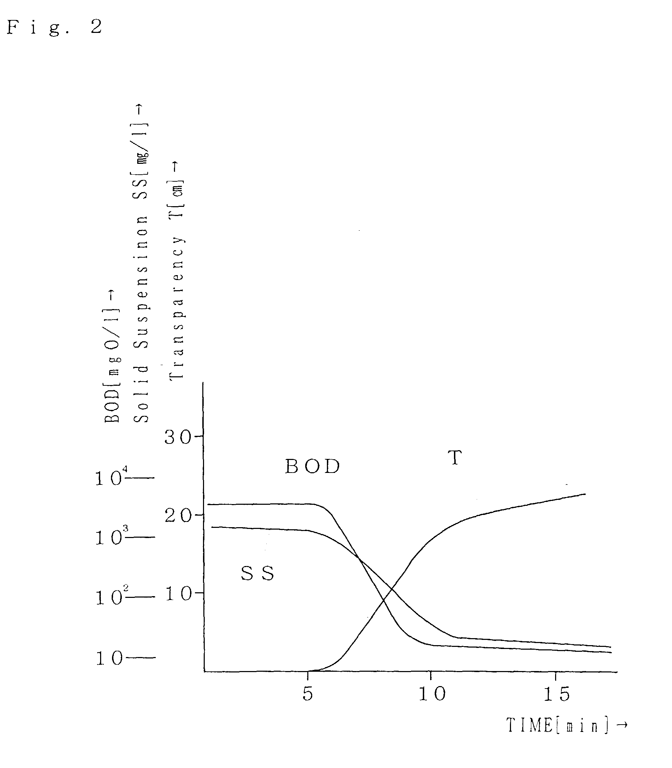

Fig. 2 shows the time transition of transparency (cm), BOD (mgO/l) and solid suspension SS (mg/l) of said sample water during said process. As shown in Fig. 2, BOD was 5000 mgO/l at first and decreased to 20 ~ 30 mgO/l in 7~8 minutes after aeration. SS decreased from 1000 mg/l to 40 mg/l in about 10 minutes after aeration. On the contrary, transparency (cm) was almost 0 at first. And it increased to 22~23 (cm) 10 minutes later as BOD and SS decreased.

This suggests that a lot of Streptomyces proliferated on the a material for wastewater treatment in the present invention produced much of metabolites with decomposing activities of organic substances to result in an excellent wastewater treatment in a very short period, in addition to the removal of SS by the filtration after aeration.

Odor gases were not produced during said process. This resulted from that the metabolites of *Streptomyces* did not produced odor gases.

The same test was carried out using charcoal with the proliferation of the *Streptomyces,* whose amount was a little bit more. The other test was carried out using said second material for wastewater treatment alone, whose amount was a little bit more. Both tests showed that said both materials had the ability of wastewater treatment, though the time for wastewater treatment and the value of BOD were different from those of said mixture of the first to third material for wastewater treatment.

### Embodiment 2

Hog feces and urine without solids-separation was diluted twice with tap water and the diluted hog feces and urine was used as enriched wastewater. 1 litter of said enriched waste water was poured in an aeration tank and aerated with stir for about 3 minutes after the addition of 10g of a material for wastewater treatment which consists of the same components as those in said embodiment 1. This time, foams produced by said aeration were not removed from said aeration tank. Then, said enriched wastewater after aeration was filtrated through a column in which activated carbon was filled up. Said filtrated water was recirculated to said column again and the recirculation was carried out for about 10 minutes. In this test, said activated carbon was used after formation of biological slime by recirculation of enriched wastewater in which a material for wastewater treatment was added

The transparency (cm); BOD (mgO/l), SS (mg/l), color and odor were measured for enriched waste water before the wastewater treatment and for the treated water after said treatment. The following shows the results carried out by a registered analytical firm.

| | Enriched waste water | Treated water |
|---|---|---|
| Transparency (cm) | < 1.0 | 1.5 |
| BOD (mgO/l) | 4,500 | 280 |
| SS (mg/l) | 1,800 | 150 |
| Color | Dark black | Pale yellowish brown |
| Odor | Strong odor of feces | Trace odor |

As shown above data, BOD and SS decreased 90 some % and transparency was improved more than 50 %, in spite of a very short time of 13 minutes in whole process. Besides, the odor almost vanished. These results suggest that *Streptomyces* inoculated on a material for wastewater treatment and its metabolites worked in said aeration tank and that *Streptomyces* and other various kinds of microorganisms adsorbed on activated carbon and their metabolites worked together with the adsorption by activated carbon in said filtration column. In the case of the filtration of enriched wastewater alone through said column in which activated carbon is filled up, the enriched wastewater cannot be purified in such a short time and in such a remarkable improvement. The values of BOD and SS of the purified water were worse compared with those in embodiment 1. This seemed to come from that hog feces and urine without solids-separation was used as enriched waste water. In this embodiment, the filtration time was taken longer than that in embodiment 1, because said sample water of this time was hog feces and urine without solids-separation.

## Claims

1. A material for wastewater treatment comprising of *Actinomycetes* dominantly proliferated on an inorganic and/or organic carrier.

2. A material of claim 1, in which said inorganic carrier is high porous

3. A material of claim 1, in which said organic carrier is a waste medium after cultivation of mushroom or a culture medium with the proliferation of mycelia of mushroom

4. A material of claim 1, in which said material is comprising of the mixture of the following first and second materials for wastewater treatment, said first material for wastewater treatment is one produced by dominantly proliferating *Actinomycetes* on the inorganic carrier described, and said second material for wastewater treatment is one produced by dominantly proliferating *Actinomycetes* on the waste medium after cultivation of mushroom .

5. A material of claim 4, in which said first material for wastewater treatment is produced by carbonization of a waste medium after cultivation of mushroom, and the said second material for wastewater treatment is produced by fermentation of a waste medium after cultivation of mushroom.

6. A material of claim 1, in which said material is comprising of the mixture of the following first to third materials for wastewater treatment, said first materials for wastewater treatment is one produced by dominantly proliferating *Actinomycetes* on said inorganic carrier, the second material for wastewater treatment is one produced by dominantly proliferating *Actinomycetes* on said organic carrier produced by fermentation of a waste medium after cultivation of mushroom, and the third material for wastewater treatment is one produced by dominantly proliferating *Actinomycetes* on said organic carrier produced by the addition and fermentation of a putrefactive waste to the waste medium after cultivation of mushroom.

7. A material of claim 1, in which said *Actinomycetes* belongs to Genus *Streptomyces*

8. A material of claim 1, in which the number of said *Streptomyces* dominantly proliferated is more than 10⁸ cells in 1g of a material for wastewater treatment

9. A method of wastewater treatment characterized by the following 1st to 3rd steps, in which said 1st step is one which a material for wastewater treatment produced by dominantly proliferating *Actinomycetes* on an inorganic and/or an organic carrier is added to a wastewater like hog feces and urine, said 2nd step is one which aeration is carried out to said waste water, and said 3rd step is one which a wastewater treatment is achieved by filtration.

10. A method of claim 9, in which said 1st step is one which a materialfor wastewater treatment produced by dominantly proliferating *Actinomycetes* on a waste medium after cultivation of mushroom is added to a wastewater like hog feces and urine, said 2nd step is one which aeration is carried out to said wastewater, and said 3rd step is one which wastewater treatment is achieved by filtration.

11. A method of 9, in which said 1st step is one which filtration is carried out to a waste water, and said 2nd step is one which aeration is carried out again to said filtrate mainly for a decomposition and removal of soluble organic substances in it.

12. A method of claim 10, in which said 1st step is one which filtration is carried out to the waste water, and said 2nd step is one which aeration is carried out again to said filtrate mainly for a decomposition and removal of soluble organic substances in it.

13. A method of claim 9 to 12, in which the mixture of the first and second materials is adding to a waste water, said first material for wastewater treatment is produced by dominantly proliferating *Actinomycetes* on an inorganic carrier, and said second material for wastewater treatment is produced by dominantly proliferating *Actinomycetes* on the waste medium after cultivation of mushroom.

14. A method of claim 9 to 12, in which the mixture of the following three types of materials for wastewater treatment is adding to a waste water, the first material for wastewater treatment is one produced by dominantly proliferating *Actinomycetes* on an inorganic carrier, the second material for wastewater treatment is one produced by dominantly proliferating *Actinomycetes* on an organic carrier, which is produced by fermentation of the waste medium after cultivation of mushroom, and the third material for wastewater treatment is one produced by dominantly proliferating *Actinomycetes* on said organic carrier, which is produced by the addition and fermentation of a putrefactive waste to the waste medium after cultivation of mushroom.

15. A method of wastewater treatment of claim 9 to 12, in which said *Actinomycetes* belongs to Genus *Streptomyces*

16. A method of wastewater treatment of claim 9 to 12, in which thenumber of said *Streptomyces* dominantly proliferated is more than 10⁸ cells in lg of a material for wastewater treatment

17. A method of wastewater treatment of claim 14, in which 1g to20g of said material for wastewater treatment is 1 litter of a waste water.

18. A material according to claim 7, in which said Actinomycetes belonging to the Genus Streptomyces is Streptomyces sp. YS-1.

19. A method of wastewater treatment according to claim 15, in which said Actinomycetes belonging to the Genus Streptomyces is Streptomyces sp. YS-1.
